# EUROPÄISCHE PATENTANMELDUNG

(11) **EP 0 870 810 A1**
(43) Veröffentlichungstag der Anmeldung: **14.10.1998**
(21) Anmeldenummer: 98103347.5
(22) Anmeldetag: 26.02.1998
(51) Int. Cl.: C09D 179/08, C09D 5/08

(54) **Metallisches Substrat, insbesondere eine Fahrzeugkarosserie, mit einer korrosionsschützenden Haftschicht**

(30) Priorität: 11.04.1997 DE 19715062
(71) Anmelder: Daimler-Benz Aktiengesellschaft, 70567 Stuttgart (DE)
(72) Erfinder: Negele, Ute, Dr., 71404 Korb (DE); Becher, Chris, 72574 Bad Urach (DE)

(57) **Zusammenfassung**

Die Erfindung betrifft ein metallisches Substrat, insbesondere Fahrzeugkarosserie, mit einer korrosionsschützenden Haftschicht, enthaltend haftvermittelnde Polymere, auf der Basis organischer Verbindungen, sowie ein Verfahren zum Aufbringen dieser Haftschicht. Erfindungsgemäss ist vorgesehen, dass die Haftschicht als haftvermittelnde Polymere Poly-bismaleimide enthält, die Homo- oder Copolymere von Bismaleimiden und/oder maleimid-terminierten Oligomeren bzw. Polymeren sein können, die aber auch Copolymere aus diesen Verbindungen und organischen Verbindungen mit polymerisierbaren funktionellen Gruppen sein können. Die Haftschicht wird aus Lösung, Emulsion einer Dispersion appliziert und durch Erhitzung oder Strahlung fixiert.

## Beschreibung

Die Erfindung betrifft ein metallisches Substrat, insbesondere eine Fahrzeugkarosserie, mit einer korrosionsschützenden Haftschicht gemäss dem Oberbegriff von Anspruch 1 sowie ein Verfahren zur Applikation einer korrosionsschützenden Haftschicht gemäss dem Oberbegriff von Anspruch 7.

Dabei wird unter einer "korrosionsschützenden" Schicht sowohl eine die Korrosion verlangsamende als auch die Korrosion verhindernde, also korrosionsinhibierende Schicht verstanden.

Gattungsgemässe Substrate bzw. Verfahren sind aus dem deutschen Patent 195 24 198 und der deutschen Patentanmeldung 196 50 478, eingereicht am 5.Dezember 1996, bekannt. In der DE-PS 195 24 198 sind lackierte Blechbauteile mit einer korrosionsschützenden Haftschicht auf der Basis von Polysäuren aus Homo- oder Copolymeren von Doppelbindungen enthaltenden Carbonsäuren oder funktionellen Carbonsäurerestern und ein Verfahren zum Aufbringen einer solchen Haftschicht offenbart. In der deutschen Patentanmeldung 196 50 478 sind ebenfalls lackierte metallische Substrate mit einer korrosionsschützenden Haftschicht offenbart; die Haftschicht basiert hier auf Homo- oder Copolymeren von Doppelbindungen enthaltenden Phosphonsäuren bzw. funktionellen Phosphonsäureresten. In beiden Fällen lassen sich Haftschichten herstellen, die gegenüber der bisher üblichen Phosphatierung und anschließenden elektrophoretischen Tauchlackierung einen qualitativ zufriedenstellenden Korrosionsschutz liefern. Die Verwendung von Polysäuren ist ausserdem umweltfreundlicher, da keine toxischen Schwermetallsalze oder Schwermetalloxide anfallen, die als Sondermüll entsorgt werden müßten.

Nachteilig an diesen Haftschichten ist, dass den Polysäuren Polymere hoher Glastemparatur und/oder niedermolekulare Säuren zugeschlagen sein müssen, um eine ausreichende Naßhaftfestigkeit und somit einen befriedigenden Korrosionsschutz zu erzielen.

Dies gilt insbesondere für einen guten Korrosionsschutz bei Aluminium. Um einen guten Korrosionsschutz zu erzielen, wird Aluminium immer noch häufig chromatiert. Die Vorbehandlungslösungen enthalten Cr(VI)-Verbindungen und sind daher toxisch und carzinogen. Die entstehenden Schichten enthalten Cr-Verbindungen, welche ebenfalls toxisch sind. Die Entsorgung dieser Stoffe ist teuer und aufwendig. Wird Aluminium anodisiert, um einen guten nichttoxischen Korrosionsschutz zu erzielen, so fallen hohe Energie- und Verfahrenskosten an.

Aufgabe der Erfindung ist es daher, ein gattungsgemässes metallisches Substrat mit einer korrosionsschützenden Haftschicht und ein Verfahren zu ihrer Applikation bereitzustellen, die die Vorbehandlung von Metallen vereinfachen und trotzdem einen guten Korrosionsschutz, sowie eine gute Haftung einer darauffolgenden Lackierung auf dem Substrat gewährleisten.

Die Lösung besteht in einem metallischen Substrat mit den Merkmalen des Anspruchs 1 sowie in einem Verfahren mit den Merkmalen des Anspruchs 7.

Erfindungsgemäss werden also ein neues Vorbehandlungskonzept und ein neues Vorbehandlungsmaterial offenbart. Die Qualität des Korrosionsschutzes ist auch für Aluminium zufriedenstellend, so dass auf die Chromatierung verzichtet werden kann. Die aufwendige Dotierung der bekannten Polysäuren mit zusätzlichen Verbindungen entfällt. Es können auch Substrate in Mischbauweise mit einer erfindungsgemässen Haftschicht versehen sein. Die Haftschicht kann insbesondere auf Stahl, Aluminium, verzinktem Stahl oder Magnesium aufgebracht werden. Die Haftschicht ist sehr beständig gegenüber Feuchtigkeit, Lösemitteln sowie korrosiven Substanzen und bietet dem Substrat einen sehr guten Schutz vor diesen Stoffen. Die Haftschicht ist ferner äusserst temperaturstabil. Das ermöglicht eine Anwendung über weite Bereiche, insbesondere Motoren, Karossen, einzelne Motoren- oder Karosseriebauteile, Aggregate oder Coil.

Die applizierten Schichten zeigen eine sehr gute Haftung zum Substrat und zu einer möglicherweise folgenden Lackschicht, sehr gute Feuchtigkeitsbeständigkeit und Naßhaftschicht und somit einen sehr guten Korrosionsschutz. Es genügt, die Schichten in einer geringen Schichtdicke von 50 bis 5000 mm aufzutragen. Durch die Materialeinsparung sind das Substrat bzw. das Verfahren in seiner Herstellung besonders kostengünstig.

Die maleimid-terminierten Polymere sind vorzugsweise Phenolharze, Polyamide, Polyetherketone, Polyethersulfone oder Polyester. Geeignet sind auch Polydiamine und Polydianhydride mehrfunktioneller organischer Säuren.

Geeignete Bis-maleimide sind lineare oder cyclische, substituierte oder unsubstituierte Kohlenwasserstoffe mit 1 bis 6 C-Atomen, Phenylenreste, Biphenylreste, Triazole sowie Diphenylverbindungen. Beispiele sind N,N'-Ethylen-bismaleimid, N,N'-Hexamethylen-bismaleimid, N,N'-m-Phenylen-bismaleimid, N,N'-p-Phenylen-bismaleimid, N,N'-4,4'-Diphenylen-bisaleimid, N,N'-4,4'-Diphenylether-bismaleimid, N,N'-4,4'-Diphenylketon-bismaleimid, N,N'-4,4'-Diphenylsulfon-bismaleimid, N,N'-4,4'-Dicyclohexylmethan-bismaleimid, N,N'-4,4'-(1,1-Diphenylpropan)-bismaleimid und N,N'-3,5-(1,2,4-triazol)-bismaleimid.

Die organischen Verbindungen sind bevorzugt polymerisierbare ungesättigte Verbindungen, insbesondere Vinylmonomere, radikalisch polymerisierbare ungesättigte Verbindungen und radikalisch polymerisierbare ungesättigte Oligomere. Beispiele sind Styrol, substituiertes Styrol, Acrylnitril, Acrylsäure und deren Ester, Methacrylsäure und deren Ester, Acrylamid, Glycidylacrylat, Glycidylmethacrylat, Divinylbenzol, Divinyltoluol, Vinylphosphonsäure, Vinylbenzoesäure, Crotonsäure, Zimtsäure, Sorbinsäure, Undecensäure, Ölsäure, Kaffeesäure, Vinylsilanverbindungen, Vinylether u.a.m.. Beispiele für radikalisch polymerisierbare ungesättigte Oligomere und Polymere sind ungesättigte Polyester, Polybutadien, Polypentadien u.a.. Diese Verbindungen reagieren beim Trocknen und Homo- unter Copolymerisation.

Ebenfalls geeignet sind auch Amino- oder Thiogruppen enthaltende Verbindungen, die mit Bismaleimiden unter Michael-Addition reagieren.

Ferner geeignet sind Verbindungen, die allylische Doppelbindungen enthalten und mit Bismaleimiden als EN-Reaktion reagieren. Beispiele sind Allylphenol oder o,o'-Diallylbisphenol A.

Weiterhin geeignet sind auch Cyanatverbindungen, die mit Bismaleimiden unter Addition und Cyclisierung sowie Trimerisierung reagieren. Ebenso geeignet sind Isocyanatverbindungen und Epoxide. Geeignete Epoxide sind z.B. Tetraglycidyldiaminodiphenylmethan, Polyphenyl-2,3-epoxypropylether-co-dicyclopentadien, 4-Vinylcyclohexen-1,2-epoxid sowie 4-Vinylcyclohexen-diepoxid.

Neben diesen Verbindungen sind auch Carbon- oder Phosphonsäuren geeignet und zwar auch solche, die nur eine funktionelle Gruppe besitzen. Bevorzugt sind Alkyl- oder Aryl-Phosphonsäuren bzw. -Carbonsäuren. Beispiele sind Ethylphosphonsäure oder Benzoesäure.

Das erfindungsgemässe Verfahren ist dadurch gekennzeichnet, dass als haftvermittelnde Polymere die erwähnten Polybismaleimide Verwendung finden. Diese werden aus organischer oder wässriger Lösung aus einer Dispersion oder einer Emulsion in einer Schicht appliziert. Auf das Metallsubstrat wird also eine dünne organische Schicht aufgebracht. Nach der Applikation wird diese Schicht bei erhöhten Temperaturen, vorzugsweise 80 bis 200°C, ausgehärtet. Enthält die organische Schicht geeignete Moleküle, dann ist auch eine Härtung durch Bestrahlung bei Raumtemperatur möglich. Die Applikation der Schicht kann durch alle herkömmlichen Applikationsmethoden erfolgen, insbesondere durch Spritzen, Tauchen, Rollen, Rakeln usw.. Auch elektrophoretisch unterstützte Applikationsverfahren sind anwendbar.

Um die organische Schicht aufzubringen, wird also eine organische oder wässrige Lösung, eine Emulsion oder Dispersion verwendet, die Bismaleimide und ggf. weitere organische Verbindungen enthält. Bei der Härtung reagieren diese Verbindungen und die Bismaleimide unter Homo- oder Copolymerisation. Bei Bedarf können geeignete Hilfsstoffe, z.B. Emulgatoren oder Dispersionshilfsmittel, zugesetzt werden.

Die Applikation kann auch in zwei Stufen erfolgen. Zuerst wird auf dem Substrat eine dünne organische Schicht aus den erwähnten organischen Verbindungen mit polymerisierbaren funktionellen Gruppen appliziert. Die Applikation kann dabei ebenfalls aus organischer oder wässriger Lösung oder aus einer Dispersion oder Emulsion erfolgen. Nach der Applikation werden die Schichten bei Temperaturen zwischen 20°C und 200°C getrocknet. In einem zweiten Schritt wird eine dünne Schicht aus Bismaleimide enthaltenden Lösungen, Emulsionen oder Dispersionen appliziert. Diese Schichten wird bei Temperaturen zwischen 50°C und 250°C getrocknet. Dabei kann eine Homopolymerisation der Bismaleimide ablaufen. Weiterhin können auch die bereits oben erwähnten Polymerisationsreaktionen zwischen der ersten und der zweiten Schicht ablaufen. Das heisst, dass zum einen die erste Schicht aus organischen Verbindungen bedingt durch die Polymerisationsreaktion, auf dem Substrat haftet. Die zweite Schicht haftet, bedingt durch denselben Mechanismus, an der ersten Schicht.

Gegebenenfalls wird vor der Applikation ein geeigneter Polymerisations-Katalysator zugefügt. Besonders geeignet sind organische Peroxide oder ionische Katalysatoren, z.B. Diazabicyclooctan.

Im Anschluss an die Applikation der Haftschicht kann sofort ein Decklack aufgetragen werden. Das Auftragen eines Füllers ist nicht zwingend notwendig.

Mit dem erfindungsgemässen Verfahren können Substrate verschiedenster Art, auch in Mischbauweise, mit einer Haftschicht auf der Basis von Poly-bismaleimid beschichtet werden. Es sind z.B. Substrate aus Stahl, Aluminium, verzinktem Stahl oder Magnesium geeignet. Bedingt durch die hervorragenden Eigenschaften und die grosse Stabilität der Haftschichten können als Substrate Karossen, Motoren, Karosserie- und Motorbauteile, Aggregate oder Coil beschichtet werden. Das Verfahren ist einfach und kostengünstig anwendbar und führt zu einem qualitativ hochwertigen Korrosionsschutz.

Im folgenden wird die Erfindung anhand einiger Ausführungsbeispiele näher erläutert.

### Ausführungsbeispiel 1:

### Applikation unmodifizierter Bismaleimid-Schichten auf Stahl-Substraten.

Ein mit Ethylacetat gereinigtes Karosseriestahlblech (Werkstoff Nr. 1.0347) wird mittels eines Rakelgerätes mit einer 20%igen Lösung eines Gemisches aus Bismaleimiden (Technochemie: Compimide 976) in Dioxan beschichtet. Das beschichtete Blech wird in einem Umlufttrockenschrank bei 180°C 60 min lang stabilisiert. Anschliessend wird das beschichtete Blech mit einem Polyurethanacrylat-Decklack (Mercedes-Benz MB A00198648337/A0019868337) mittels Rakel beschichtet und im Umlufttrockenschrank bei 80°C 20 min lang ausgehärtet.

Derartig hergestellte Bismaleimid-Schichten zeigen auf dem Substrat ausgezeichnete Nasshaftfestigkeiten von über 1500 h bei 35°C Wasserlagerung. Die zur Korrosionsprüfung mit einem Ritz versehenen beschichteten Bleche zeigen nach 4 Zyklen im VDA-Wechseltest eine Unterwanderung von 3-4 mm.

### Ausführungsbeispiel 2:

### Modifierte Bismaleimid-Schichten auf Aluminium-Substraten

Ein mit Ethylacetat vorgereinigtes Aluminiumblech (AlMg_{0,4}Si_{1,2}) wird durch zweiminütiges Tauchen in einer 20%igen wässrigen Reinigungslösung (Henkel: Primalu) und anschliessendem Abspülen mit deionisiertem Wasser gereinigt und 30 min bei 100°C im Umlufttrockenschrank getrocknet. Das so gereinigte Blech wird mittels Rakel mit einer 10%igen Lösung aus 9 Teilen eines Bismaleidgemisches (Technochemie: Compimide 976) und einem Teil 4-Vinylcyclohexen-1,2-epoxid in Dioxan beschichtet und bei 200°C 60 min im Umlufttrockenschrank stabilisiert. Die Bleche wurden wie in Ausführungsbeispiel 1 mit einem Polyurethanacrylatlack beschichtet.

Derartig beschichtete Bleche zeigen ausgezeichnete Nasshaftfestigkeiten von über 1500 h bei 35°C Wasserlagerung. Die zur Korrosionsprüfung mit einem Ritz versehenen beschichteten Bleche zeigen nach 240 Stunden im CASS-Test eine Unterwanderung von 0,1 bis 0,15 mm.

### Ausführungsbeispiel 3:

### Modifizierte Bismaleid-Schichten auf Stahlsubstraten

Ein mit Ethylacetat gereinigtes Karosseriestahlblech (Werkstoff-Nr. 1.0347) wird mittels eines Rakelgerätes mit einer 20%igen Lösung aus 8 Teilen eines Gemisches aus Bismaleimiden (Technochemie: Compimide 796) und 2 Teilen 2-Aminothiazol in Dioxan beschichtet. Das beschichtete Blech wird in einem Umlufttrockenschrank bei 200°C 60 min lang stabilisiert. Anschliessend wird das beschichtete Blech wie im Ausführungsbeispiel 1 mit einem Polyurethanacrylat-Decklack versehen.

Die zur Korrosionsprüfung mit einem Ritz versehenen beschichteten Bleche zeigen nach 11 Zyklen im VDA-Wechseltest eine Unterwanderung von 9 bis 11 mm.

### Ausführungsbeispiel 4:

### Zweischichtig aufgebaute Schichten

Ein mit Ethylacetat gereinigtes Karosseriestahlblech (Werkstoff-Nr. 1.0347) wird mittels einminütigem Tauchen in einer 0,01%igen 4-Vinylbenzoesäure-Lösung aus einem Teil Aceton und einem Teil deionisiertem Wasser beschichtet und anschliessend 10 min bei 120°C im Umlufttrockenschrank getrocknet. Nun wird das so behandelte Blech mit einer 20%igenlösung eines Bismaleidgemisches (Technochemie: Compimide 796) in Dioxan mittels Rakel beschichtet und 60 min bei 200°C im Umlufttrockenschrank stabilisiert. Anschliessend wird das beschichtete Blech wie im Ausführungsbeispiel 1 mit einem Polyurethanacrylat-Decklack beschichtet. Die zur Korrosionsprüfung mit einem Ritz versehenen beschichteten Bleche zeigen nach 11 Zyklen im VDA-Wechseltest eine Unterwanderung von 6 bis 7 mm.

## Patentansprüche

1. Metallisches Substrat, insbesondere Fahrzeugkarosserie, mit einer korrosionsschützenden Haftschicht, enthaltend haftvermittelnde Polymere auf der Basis organischer Verbindungen,
**dadurch gekennzeichnet**,
dass die Haftschicht als haftvermittelnde Polymere Poly-bismaleimide enthält, wobei die Poly-bismaleimide bestehen aus:
- Homopolymeren oder Copolymeren von Bismaleimiden und/oder maleimid-terminierten Oligomeren und/oder maleimid-terminierten Polymeren; und/oder
- Copolymeren aus diesen Verbindungen und organischenVerbindungen, welche polymerisierbare funktionelle Gruppen enthalten.

2. Metallisches Substrat nach Anspruch 1, dadurch gekennzeichnet, dass die Bismaleimide die allgemeine Formel 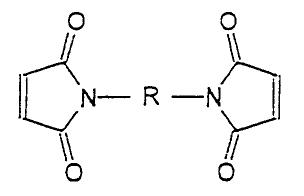 aufweisen, worin R ein Rest ist, der aus der Gruppe bestehend aus linearen oder cyclischen, substituierten oder unsubstituierten Kohlenwasserstoffen mit 1 bis 6 C-Atomen, Phenylenresten, Biphenylresten, Triazolen sowie Verbindungen mit den allgemeinen Formeln 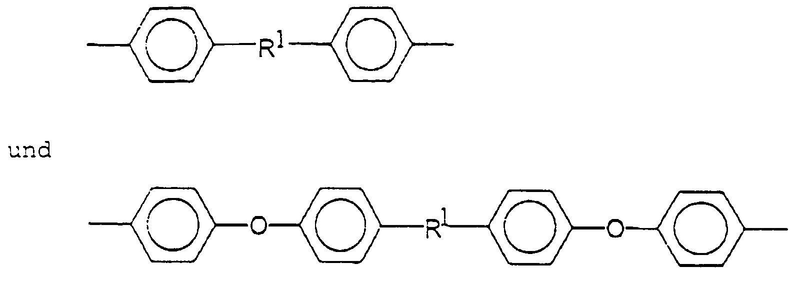 ausgewählt ist, wobei R¹ aus der Gruppe bestehend aus - CH₂-, -O-, -C(=0)-, C(CF₃)₂-, -S-, -S-S-, -SO- und - SO₂- ausgewählt ist.

3. Metallisches Substrat nach AnSpruch 1, dadurch gekennzeichnet, dass die maleimid-terminierten Polymere Phenolharze, Polyamide, Polyetherketone, Polyethersulfone oder Polyester oder Polydiamine mehrfunktioneller Säuren, insbesondere Verbindungen mit der allgemeinen Formel 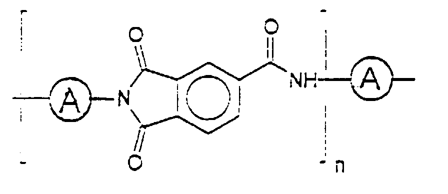 oder Polydianhydride mehrfunktioneller Säuren insbesondere mit der allgemeinen Formel 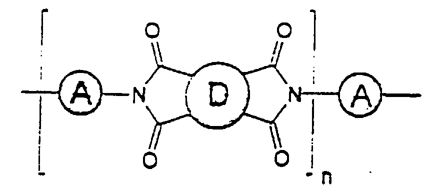 sind, wobei A für Diamin imd D für Dianhydrid steht.

4. Metallisches Substrat nach einem der vorhergehenden Ansprüche, dadurch gekennzeichnet, dass die organischen Verbindungen aus der Gruppe bestehend aus polymerisierbaren ungesättigten Monomeren, Oligomeren und Polymeren, Amino- oder Thiogruppen enthaltenden Verbindungen, allylische Doppelbindungen enthaltenden Verbindungen, Cyanatverbindungen, Isocynatverbindungen, Epoxiden, Alkyl- oder Arylcarbonsäuren und Alkyl- oder Arylphophonsäuren ausgewählt sind.

5. Metallisches Substrat nach Anspruch 4, dadurch gekennzeichnet, dass die organischen Verbindungen eine oder zwei funktionelle Gruppen aufweisen.

6. Metallisches Substrat nach einem der vorhergehenden Ansprüche, dadurch gekennzeichnet, dass die Korrosionsschutzschicht eine Dicke von 10 bis 5000 nmaufweist.

7. Verfahren zur Applikation einer korrosionsschützenden Haftschicht auf ein metallisches Substrat, insbesondere auf eine Fahrzeugkarosserie vor dem Lackieren, bei dem das Substrat gereinigt und entfettet wird, anschliessend eine haftvermittelnde Polymere auf der Basis organischer Verbindungen enthaltende Haftschicht aufgebracht wird und diese Haftschicht anschliessend auf der Substratoberfläche satabilisiert wird, dadurch gekennzeichnet, dass:
- als haftvermittelnde Polymere Poly-bismaleimide verwendet werden, wobei die Poly-bismaleimide bestehen aus:
- Homopolymeren oder Copolymeren von Bismaleimiden, maleimid-terminierten Oligomeren und/oder maleimid-terminierten Polymeren und/oder
- Copolymeren aus diesen Verbindungen und organischen Verbindungen, welche polymerisierbare funktionelle Gruppen enthalten,
- eine Schicht aus diesen Verbindungen aus organischer oder wässriger Lösung, aus einer Dispersion oder einer Emulsion appliziert wird,
- und diese Schicht anschliessend durch Erhitzen und/oder Bestrahlen stabilisiert wird.

8. Verfahren nach Anspruch 7, dadurch gekennzeichnet, dass die organische oder wässrige Lösung, Dispersion oder Emulsion in einer Konzentration von 5 bis 30 Gew.-% verwendet wird.

9. Verfahren nach einem der Ansprüche 7 oder 8, dadurch gekennzeichnet, dass vor der Applikation ein oder mehrere Katalysatoren, vorzugsweise organische Peroxide oder ionische Katalysatoren, zugesetzt werden.

10. Verfahren nach einem der Ansprüche 7 bis 9, dadurch gekennzeichnet, dass vor der Applikation geeignete Hilfsstoffe, insbesondere Dispersionshilfsmittel und/oder Emulgatoren zugesetzt werden.

11. Verfahren nach einem der Ansprüche 7 bis 10, dadurch gekennzeichnet, dass die Haftschicht durch Erhitzen bei Temperaturen von 50°C bis 250°C, vorzugsweise 80°C bis 200°C, stabilisiert wird.

12. Verfahren nach einem der Ansprüche 7 bis 11, dadurch gekennzeichnet, dass vor dem Aufbringen der Haftschicht eine dünne organische Schicht aus organischen Verbindungen, welche polymerisierbare funktionelle Gruppen enthalten, appliziert und durch Erhitzen stabilisiert wird.

13. Verfahren nach Anspruch 12, dadurch gekennzeichnet, dass die organische Schicht einer wäßrigen oder organischen Lösung oder aus einer Dispersion oder Emulsion appliziert wird.

14. Verfahren nach Anspruch 12 oder 13, dadurch gekennzeichnet, dass die organische oder wäßrige Lösung aus einer Dispersion oder Emulsion in einer Konzentration von 0,05 bis 3 Gew.-% verwendet wird

15. Verfahren nach einem der Ansprüche 12 bis 14, dadurch gekennzeichnet, dass die Stabilisierung der organischen Schicht durch Erhitzen bei Temperaturen von 20°C bis 200°C vorzugsweise 70°C bis 140°C vorgenommen wird.

16. Verfahren nach einem der Ansprüche 7 bis 15, dadurch gekennzeichnet, dass nach dem letzten Stabilisierungsschritt direkt ein Decklack aufgetragen wird.

17. Verfahren nach einem der Ansprüche 7 bis 16, dadurch gekennzeichnet, dass Substrate aus Stahl, Aluminium, verzinktem Stahl und/oder Magnesium verwendet werden.

18. Verfahren nach einem der Ansprüche 7 bis 17, dadurch gekennzeichnet, dass als Substrate Karossen, Motoren, einzelne Karosserie- und Motorenbauteile, Aggregate oder Coil verwendet werden.
